(19) Europäisches Patentamt / European Patent Office / Office européen des brevets

(11) **EP 4 765 014 A1**

(12) **EUROPEAN PATENT APPLICATION**

(43) Date of publication:
24.06.2026 Bulletin 2026/26

(21) Application number: 25226095.5

(22) Date of filing: **20.12.2025**

(51) International Patent Classification (IPC):
*G06T 5/50* (2006.01)

(52) Cooperative Patent Classification (CPC):
**G06T 5/50;** G06T 2200/32; G06T 2207/10116;
G06T 2207/20221

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.12.2024 IT 202400029568**

(71) Applicant: **ATS Srl -Società con socio unico 24060 Torre de' Roveri (BG) (IT)**

(72) Inventor: **CICCARELLI, Mario 24100 Bergamo (IT)**

(74) Representative: **Karaghiosoff, Giorgio Alessandro c/o Praxi Intellectual Property S.p.A. - Savona Via F. Baracca 1R 17100 Savona (IT)**

(54) **METHOD FOR REDUCING LAG ARTIFACTS IN DIGITAL RADIOGRAPHS AND RADIOGRAPHIC SYSTEM FOR IMPLEMENTING THE SAID METHOD**

(57) A method for reducing lag artifacts in digital radiographs is provided in combination with an X-ray source, an X-ray detector, and a positioning station for a target to be imaged, said station being interposed in the opening cone of the radiation emitted by said source between said source and said detector, and said method comprising the combination of the following steps:

a) acquiring a sequence of frames of radiographic images of a target, each of said images being acquired by means of imaging exposures of said target performed at different consecutive time instants and at a predetermined time interval between said time instants;

b) said images of said sequence reproducing zones or areas of said target that overlap at least partially with each other with reference to two consecutive images of said sequence of images;

c) registering the images of said sequence of images based on the image data of said overlapping zones;

d) combining by merging said registered images, generating a single image comprising the reproduction of the zones of the target acquired from said images of the sequence of images.

Scheme of the first correction.

Fig. 5

**Description**

The present invention relates to a method for reducing lag artifacts in digital radiographs and to a radiographic system for implementing the said method.

The present description belongs to the field of X-ray image processing and concerns the correction of image lag artifacts on frames during the stitching procedure.

The stitching procedure of radiographic images is widely known and used in the state of the art. The stitching procedure comprises the steps of:

- acquisition of at least two radiographic images whose frames respectively reproduce one of two zones or anatomical regions of a target subject, which are at least partially overlapping with each other;
- said images being generally acquired at different time instants and from different viewpoints;
- registration of the two frames by calculating the reciprocal displacements between said two frames as a function of the image data relating to said exposure area of said frames;
- combination of the acquired frames by merging, generating a comprehensive image that contains the information of both said at least two frames, reproducing a comprehensive image of said two zones of the target subject.

As regards the radiographic field, stitching is used to overcome the dimensional limit of the flat panel detector and obtain the representation of a wide anatomical area, impossible to confine in a single exposure. It is therefore used, for example, to evaluate scoliosis or to monitor the state of a bone fracture of a lower limb.

Generally, in the process of acquiring radiographic images, a sequence of images is acquired at different and successive time instants and/or from different viewpoints, i.e., of zones or areas of the target different from each other, each of said images of said sequence presenting frames of said zones at least partially overlapping the frame previously and/or subsequently acquired in said sequence.

From a technical point of view, stitching can therefore be linear or angular: in the first case, the various frames to be combined with each other are acquired by moving the patient support relative to the X-ray generator or vice versa, while in the second case a rotation of the X-ray generator relative to the target subject is performed.

The images of each pair of two images of the sequence of images contain an overlapping zone, so during registration it is necessary to find the horizontal and vertical displacements of the second image, i.e., the image acquired at a time instant subsequent to the acquisition instant of the first image, to understand where to join the two frames.

According to another characteristic known in the state of the art, the overlapping regions are joined together using a "gradient kernel" function since, if the frames are joined in the vertical direction, the upper frame has more weight with respect to the upper part of the overlapping region, while conversely the lower part is more influenced by the lower frame. The merging also involves the zones of said two images that do not overlap.

According to another characteristic known in the state of the art, since commonly the two images are obtained with different dose levels, a normalization step is generally provided to generate a homogeneous result as if said images were acquired during the same exposure step to X-ray radiation.

In the acquisition of a temporal sequence of at least two or more images, as described above, a few seconds elapse between two frames acquired at consecutive time instants, and a quantity of residual signal subsequent to obtaining the first image may still be present when the second image is generated. Therefore, in the second image, the shape of the object impressed in the first image may be visible, and this can hinder the physician's analysis. Said residual signal is commonly known as image lag and is mainly due to the processes of trapping and releasing charge in the sensor elements.

State-of-the-art techniques are known for compensating or correcting said image lag, which operate based on modeling the exponential impulse response function of the detector, technically called IRF (Impulse Response Function), and on the development of a so-called LTI (Linear Time-Invariant) system to correct the delay by deconvolution with this function, assuming its dependence on time. However, both the behavior of the detector and the image delay are sensitive to exposure intensity, and the non-uniformity of the detector response must be taken into account, as well as the different delay signal coming from objects with different contrast, so the said solution has not proved sufficient to perform an accurate correction that allows substantial elimination of artifacts due to said lag.

Known methods for correcting artifacts due to image lag include, for example, US5,969,360, which describes a method for eliminating artifacts due to residual images that are present in one of two images acquired by consecutive exposures and that derive from a previous exposure for acquiring an X-ray image. The acquisition of the sequence of images, namely of the two consecutive images, takes place by exposing an X-ray detector to the radiation passing through the target subject. The X-ray detector comprises at least one photoconductor for acquiring the radiation. The residual artifacts after the first correction are eliminated by a procedure comprising the steps of obtaining image data before and after the exposure of the detector to the radiation transmitted to the detector itself after passing through the target subject, estimating the image lag related to said image data, subtracting said image lag from said image data obtaining the residual artifacts corresponding to said image data, performing an averaging of said residual artifacts and subtracting said average from the image data acquired by the detector during the acquisition of the radiographic image of the target subject subsequent to the acquisition of said image data used to estimate the residual artifact.

Document EP1080443 describes a method for adjusting a portion of a so-called dark frame in accordance with the compensation values relating to the reference pixels of a dark frame to obtain an optimized portion of dark frame, and then subtracting the portion of said optimized dark frame from a corresponding portion of dark frame. The technique can be used to improve the accuracy of the image sensor such as those used in digital cameras or video conferencing cameras by compensating for the noise of the so-called dark currents. The technique can be applied both to the CMOS image sensor and, in general, to any image sensor that requires subtraction of the dark frame. The techniques can also be used together with the calibration of image sensors and imaging systems.

Document US6904126B2 describes an apparatus and a method for acquiring radiological images in which noise is corrected by means of a fixed pattern (FPN) generated inside the apparatus and in which increases in random noise associated with said FPN correction are suppressed to provide a radiological image having improved reliability and image quality. The apparatus is equipped with a signal processing circuit that digitizes the analog output from a readout circuit, four FPN memories for storing four dark outputs, a memory for the image data acquired following exposure to X-rays of a subject, a CPU for controlling the processing circuit, as well as the fixed noise patterns and the memories for the image data acquired following exposure to the radiation of the subject, and a shift resistor controlled by the CPU. The method provides for calculating the average of said dark outputs and subtracting said average of the fixed noise pattern data thus obtained from the image data of the target acquired to improve image quality. Since the correction of the fixed noise patterns uses data whose average has been calculated over multiple dark outputs, the method also suppresses random noise generated by the correction for greater image accuracy.

Document US7496223 describes a method for eliminating ghost effects according to which offset images are recorded in an image acquisition device with an X-ray detector immediately before and after the acquisition of a radiographic image and, from said offset images, an optimized offset image is calculated which is used to calculate a radiographic image free of ghost effects.

The current methods and systems for acquiring radiographic images that operate using state-of-the-art techniques do not yet allow suppression of artifacts due to said image lag effects either with regard to the at least substantial cancellation of image residues or with regard to the speed of determination and application of corrections to radiographic images of a target during a procedure that involves stitching at least two, generally more than two radiographic images acquired at consecutive time instants and reproducing areas or zones of the target that are different and that overlap at least partially with each other.

According to a first aspect of the present invention, said method for reducing lag artifacts in digital radiographs is provided in combination with an X-ray source, an X-ray detector, and a positioning station for a target to be imaged, said station being interposed in the opening cone of the radiation emitted by said source between said source and said detector, and said method comprising the combination of the following steps:

a) executing acquisition of a sequence of frames of radiographic images of a target, each of said images being acquired by means of imaging exposures of said target performed at different consecutive time instants and at a predetermined time interval between said time instants;

b) said images of said sequence reproducing zones or areas of said target that overlap at least partially with each other with reference to two consecutive images of said sequence of images;

c) registering the images of said sequence of images based on the image data of said overlapping zones;

d) combining by merging said registered images, generating a single image comprising the reproduction of the zones of the target acquired from said images of the sequence of images,

and wherein:

b1) during the acquisition interval of two consecutive images of said sequence of images, the following steps are carried out:

b2) acquiring one or more so-called dark frames;

b3) subtracting said one or more dark frames or a combination thereof, optionally also parts thereof, from the subsequent image of said two consecutive images;

executing the registration step c) and the merging step d) with the images obtained from step b3).

The present invention therefore provides a combination of the usual stitching procedure, wherein not only the collection of frames relating to the exposure of the target is performed but also at least one or some dark frames, i.e., frames acquired in the absence of exposure of the target and therefore of the detector to X-rays and between one exposure and another, while the radiographic images of the target are corrected by subtracting from them the residual images due to the image lag effect, said residual images being determined by said one or more dark frames, and said subtraction generating stitching images free of artifacts or in which said artifacts are almost completely suppressed.

In the present description and in the claims, the term "image" is to be considered equivalent to the term "frame".

The term "dark frame" refers to image data acquired by the sensors forming the detector when the detector is not subjected to irradiation with X-rays and in particular with the radiation transmitted through the target.

The term "lag" or "image delay" refers to the residual signal present in the sensors forming the receiver mainly due to the processes of trapping and releasing charge in the sensors of the receiver.

Various types of receivers are known, in particular comprising an array of photodiodes that convert the incident radiation into electric charge. This is a function of the intensity of the incident radiation and is stored in a buffer memory, such as a buffer or similar. At the end of the exposure, the accumulated charge is read from the buffer of each photodiode, and the matrix of signals is converted into image data and then into frames of an image.

Image delays can occur especially during the execution of stitching steps if a narrow anatomical area is exposed to a high dose and if the subsequent framing is obtained by underexposing a wide anatomical area. The most striking case is when the first frame of a sequence of frames refers to the skull and the second to the chest: the first radiograph contains a wide region of direct exposure; therefore, the detector traps a lot of charge that is not completely released when the second, i.e., subsequent, frame is acquired, so the shape of the skull and shoulders may be visible inside the chest frame.

According to a first embodiment, the correction of a second image of two consecutive images is performed using the first dark frame acquired in the time interval between the instant of acquisition of the first image and the instant of acquisition of the second image immediately following said first image according to the following function:

$$Icorr = I - IRF[t4 - t0] * darkFrame(t0) \qquad (1)$$

where:

- *Icorr* is the corrected frame of the second stitching image;
- *I* is the frame of the second stitching image as acquired by the detector;
- *darkFrame(t0)* is the first dark frame acquired at the instant t0 after the first of the two consecutive stitching images has been acquired;
- *IRF*[*t4 - t0*] is the receiver response function corresponding to the time interval between the instant of acquisition of the second stitching image of said two consecutive stitching images and the acquisition instant t0 of the first dark frame acquired at the end of the acquisition of the first stitching image.

The term "stitching image" refers to the images of the target acquired in succession and intended to be subjected to correction, registration, and merging to obtain an image that contains the information of all the stitching images.

According to one characteristic, the impulse response function (IRF) of the detector is obtained by estimating the same from experimental data and is systematic for the detector, said estimation comprising the steps of:

performing a flood-field exposure and collecting the signals related to one or more of a predetermined number of subsequent dark frames, i.e., frames acquired in the absence of exposure of the detector to the X-rays from the source;
analyzing the changes in value over time of the parameters characterizing the appearance of the pixels and which are functions of the signals acquired by the sensors forming the receiver,
said procedure being repeated for different combinations of X-ray source power supply voltage and milliampere-seconds.

According to a possible variant, the analyzed pixels pertain to a subset of pixels in a central region of the image, with the mean value of the pixels being calculated, preferably normalized with respect to the mean value of the pixels of the dark frame first acquired at the instant t0.

According to an improvement, prior to calculating the mean of the pixels, the pixels of said subset are filtered to remove spot noise, for example, by means of a median kernel.

The acquisition pipeline is configured to acquire the dark frames in order to perform the correction, and as will be described later according to one embodiment of the method, said correction is not performed by default but is activated by settings through explicit activation action.

The residual image data still present in the image data of the second acquired image are estimated from the first dark frame after the first acquisition to avoid saturation that may occur for pixel values: this frame is multiplied by IRF(dt), which is the normalized impulse response function of the detector corresponding to the time interval between the first dark frame t0 and the second stitching image t4. The image data thus obtained from the first dark frame are then subtracted from the second acquired image.

When the artifact is particularly evident, said correction may not be sufficient because pixels with very different values may be subject to different impulse responses, and after the correction in the second acquired and corrected image, a residual artifact may still be visible. The distribution of the residual artifact is defined by two or more additional dark frames acquired after the first dark frame and, according to a further characteristic provided in combination with one or more of the preceding embodiments and variants, said two or more dark frames are used to obtain the image data representing the residual artifact itself, which must be subtracted from the corrected image to further attenuate the effect due to image lag.

This is a second correction step performed in combination with said first correction step.

According to a preferred embodiment, the correction of the image data acquired in the second stitching image of said two consecutive stitching images is calculated as a function of two parameters consisting of the mean and the standard deviation of the image data relating to the residual artifact, which can be varied to obtain the desired result.

According to a preferred embodiment, said second correction is carried out by calculating the image lag residues relating to the dark frames of a sequence of one or more dark frames acquired in succession during the time interval between the acquisition of two consecutive stitching images, subtracting the image lag from said dark frames obtained from the image data of the first dark frame of said sequence of dark frames.

The data relating to the various residual artifacts obtained from the previous step for two consecutive dark frames of a sequence of two or more dark frames are normalized by subtracting their mean and dividing them by their standard deviation, obtaining a unit variance and zero mean distribution, while the data relating to said residual artifacts are averaged to reduce possible noise, thereby obtaining image data relating to a final residual artifact with zero mean and unit variance.

According to another characteristic, it is provided that said final residual artifact with zero mean and unit variance is denormalized and, finally, subtracted from the second stitching image to which the first correction has been applied and which is subject to the second correction to obtain the final corrected image frame.

The "denormalization" of the residual artifact with zero mean and unit variance requires knowledge of the mean ($\mu$) and the standard deviation ($\sigma$) of the residual artifact at the time of acquisition of the second stitching image of at least two consecutive stitching images. These values are unknown, so one embodiment provides a step of estimating said mean ($\mu$) and standard deviation ($\sigma$) values as 90% of those obtained at the time instant of the last dark frame in the sequence of two or more dark frames before the second exposure.

According to another characteristic, since said estimates may be far from optimal parameters, they are left user-settable via the GUI.

Corrected frame of the second image, final *Ifinal* is calculated as follows:

$$I_{final} = I_{corr} - \left\{ \left[ \frac{1}{N-1} \sum_{i=2}^{N} f\left(\text{darkframe}_{t_{i-1}} - \text{IRF}[t_{i-1} - t_0] * \text{darkframe}_{t_0}\right) \right] * \sigma + \mu \right\} \quad (2)$$

where N is the number of dark frames collected and the function f(x) is defined as:

$$f(x) = (x - mean)/\texttt{std}.$$

and wherein:

i is an index ranging from 2 to N;
darkframe($t_0$) is the dark frame acquired at instant $t_0$;
darkframe($t_{i-1}$) is the second dark frame acquired at instant t(i-1), the first dark frame considered being the one at instant t(2-1)=$t_1$.

The invention also relates to a radiographic image acquisition system comprising:

at least one X-ray source;
at least one X-ray receiver;
a positioning station for a target, such as a patient or similar or an anatomical area thereof;
the X-ray source being oriented or orientable with its emission output of an X-ray beam directed at the sensitive side of said X-ray receiver;
said patient positioning station being positioned between said X-ray source and said receiver such that at least a part of the target to be imaged is traversed by said X-ray beam;
said X-ray source and/or said receiver and/or the position of the patient relative to the X-ray source and/or relative to the receiver being movable relative to each other to position in the X-ray beam one or more different areas of the target to be imaged;

a processing unit comprising:
at least one memory for a program for converting into images the signals generated by the receiver following its exposure to the X-ray beam transmitted through the target;
at least one memory for a program for controlling the operational steps of the radiographic image acquisition system;
said processing unit comprising communication ports with the outputs of the receiver and communication ports with a radiographic image display and/or printing unit;
at least one memory for a program for correcting the acquired images;
at least one program for registering and merging two or more images of a sequence of images;

in said control program being encoded the instructions executable by the processing unit and which, when executed, enable the processing unit to control the steps of acquiring radiographic images consisting of acquiring a sequence of radiographic images of the target at different times and relating to areas or zones of the target that are different from each other and at least partially overlapping for each pair of consecutive images of said sequence;
in said at least one conversion program being encoded the instructions executable by the processing unit and which, when executed, enable said processing unit to convert the signals output by the receiver into the sequence of images or frames; in said registration and merging program being encoded the instructions enabling the processing unit to register with each other each pair of consecutive images of the sequence of images reproducing different zones of the target, said zones being at least partially overlapping in said two consecutive images;
in said correction program being encoded the instructions enabling the processing unit to perform the correction steps of the subsequent image among said two consecutive images at least partially overlapping according to one or more of the embodiments of the method described above for eliminating or at least partially suppressing residual image contributions from said second image of said two consecutive images, said correction being performed prior to the registration and merging step.

In one embodiment, at least the correction program is stored on a storage medium or a removable memory unit from which it can be read and/or downloaded via an interface with a reader for said storage medium or said memory.

The characteristics of the invention described above and other characteristics as well as the advantages of the present invention will become clearer from the following description of some embodiments illustrated in the attached drawings, wherein:

Figure 1 shows a high-level block diagram of a radiographic system for generating stitching images, said system performing a correction of residual images, i.e., lag.

Figures 2.1 and 2.2 show two frames relating to two consecutive exposures of different target areas to be combined by stitching. The one on the right refers to a frontal chest radiograph with significant image lag derived from the first.

Figures 3.1 and 3.2 similarly to the previous figures show two frames relating to two consecutive exposures of different target areas to be combined by stitching. The one on the right refers to a lateral chest radiograph with significant lag artifact derived from the first.

Figure 4 shows a graph of an example of estimation of an IRF function relating to a two-dimensional receiver, so-called flat panel, with reference to time.

Figure 5 shows a block diagram of a first correction step for eliminating residual contributions of an image or frame acquired at a previous time from an image or frame executed at a directly subsequent instant after a predetermined time interval between the acquisition exposure of the first image and the acquisition exposure of the second image, said correction step being implemented using data from a dark frame acquired immediately after the first exposure has taken place.

Figure 6 shows a block diagram of a second correction step for eliminating residual contributions of an image or frame acquired at a previous time from an image or frame executed at a directly subsequent time instant and after a predetermined time interval between the acquisition exposure of the first image and the acquisition exposure of the second image, said correction step being implemented using data from a sequence of dark frames acquired at different times in said time interval between the two exposures for acquiring said first and said second image.

Figure 7 shows graphs relating to the distributions of gray tones of residual artifacts in the dark frames corresponding to three time instants t1, t2, and t3 in the time interval between the two exposures for acquiring said first and said second image.

Figure 8 shows an example of an experimental setup used for acquiring the images of the following figure.

Figures 9A to 9I respectively show:

images A, B, and C the stitching frame before correction, after the first correction, and after both corrections with automatic parameter estimation, respectively, when the lag artifact is evident but contained;

D, E, and F refer to a case with a more intrusive artifact;

G, H, and I show the same frame with the lag artifact corrected with the first correction, both corrections with automatic parameters, and both corrections adjusting respectively the amount of residual signal to subtract, the red box highlights the area where the artifact is most evident; G is an example of inadequate correction, H was considered acceptable, and I was judged as almost imperceptible artifact.

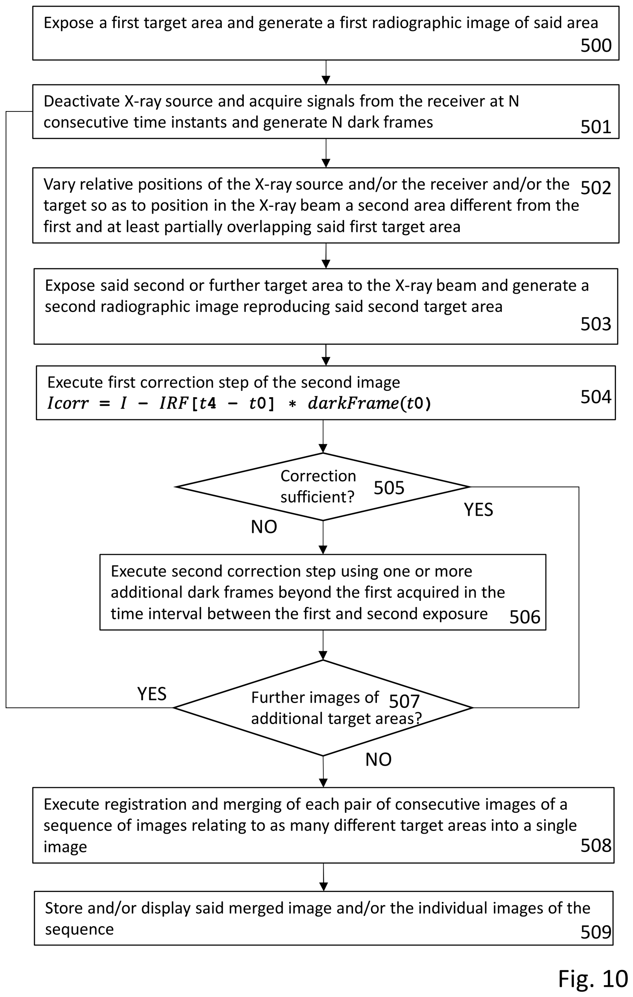

Figure 10 shows a flowchart of an exemplary embodiment of the method according to the present invention.

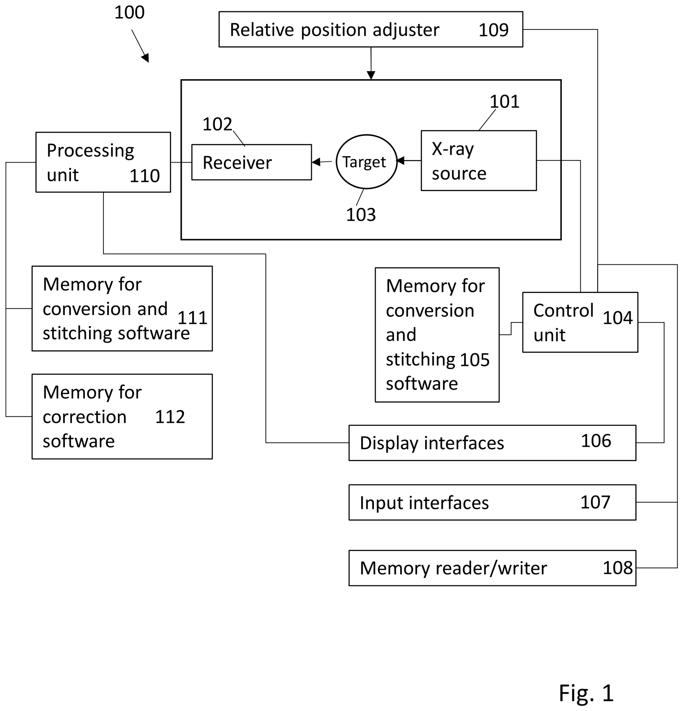

With reference to Figure 1, this shows a high-level diagram of a system for acquiring radiographic images configured to generate combination images of single images of different areas of a target, said areas being at least partially overlapping with each other, and the images of said areas being acquired in sequence at different time instants separated from each other by a predetermined time interval. Said combination, known in the state of the art as stitching, comprises the steps of registration and merging of the images of said sequence of images and optionally steps of correction of the images of said sequence, which are aimed at eliminating artifacts due to residual images of the target area of the immediately preceding image.

Such residual images are due to the fact that, at the time of reading the charges accumulated in the individual sensors forming a receiver, in particular the array of sensors of a two-dimensional receiver, the charge contained therein is not completely discharged, leaving a residue thereof for a period of time after said charges have been read and used for reconstructing the digital image corresponding to the exposure detected by the receiver.

The problem is known in the state of the art and, as described in the previous general introductory part, the state of the art does not offer to date a completely satisfactory solution capable of eliminating artifacts due to this effect called lag or image delay.

An exemplary embodiment of a radiographic image acquisition system capable of implementing the steps of the method according to the present invention is indicated with 100.

The system comprises an X-ray source 101 that emits a continuous or pulsed X-ray beam toward an opposite receiver 102, for example a so-called flat panel or another two-dimensional receiver consisting of an array of sensors. Said receiver faces the source with the sensor interface sensitive to X-ray radiation and is placed within the opening of the X-ray beam emitted by source 101.

Between source 101 and receiver 102, a positioning station 103 for a target, for example a patient, is provided. The patient positioning station 103 and/or the X-ray source 101 and/or the receiver 102 are movable and/or orientable in a variable manner relative to each other so as to allow irradiating with the X-ray beam and in succession two or more different zones of the target, of which zones at least one frame is acquired and which zones have relative positions such as to be overlapping at least for a predetermined part thereof.

The system for relative movement and/or orientation of the patient positioning station 103 and/or the X-ray source 101 and/or the receiver 102 is indicated globally with 109 and can be implemented in various ways known in the state of the art.

The movement and/or orientation system 109 can be implemented so as to allow at least one relative displacement between the target positioning station 103 and/or source 101 and/or receiver 102, which can be linear or angular or a combination of said displacements. In the first case, the various frames to be combined with each other are taken by moving, for example, a positioning support of the target provided in the positioning station 103 relative to the X-ray source 101 or vice versa, while in the second case, rotation of at least the X-ray source around the target is necessary and optionally simultaneously with the concordant rotation of the receiver.

The X-ray source 101, the receiver 102, the supports for the target of the positioning station 103, and the relative movement system of one or more of said elements 101, 102, 103 are controlled by a control unit 104. This unit comprises at least one processor and is connected to a memory 105 or to a dedicated memory area in which a control software of the radiographic scanner is stored, i.e., of said operating units thereof, in which control program the instructions are encoded to make the control unit able to manage the functions of said operating units, at least of the X-ray source 101, the receiver 102, the positioning station 103, and the relative movement system 109.

The control unit also manages one or more communication interfaces. Without this constituting a limitation, but only by way of example, in the example of Figure 1 the control unit 104 manages at least one interface for displaying the acquired radiographic images and/or other data such as, for example, the values of parameters describing the functional status of the radiographic system and/or the setting values of the operating parameters of said system. Furthermore, the control unit 104 manages a data or command input interface indicated with 107. This block 107 is to be understood as including any type of input unit that can be provided in combination with a control unit such as, for example, keyboards, touch screens, voice command input interfaces, gesture command reading interfaces, mouse or equivalent devices, and other devices known in the state of the art such as, for example, joysticks or game pads, or similar.

With 108 is indicated a box summarizing possible reading devices of memory substrates not permanently integrated into system 100 and which can consist of USB sticks or other portable memory supports, external hard disks, CDs, DVDs, and others.

Although not illustrated, it is evident that the control unit can be configured to manage one or more communication interfaces with remote units using different communication protocols, both of the type operating with wired connections and of the type operating with wireless connections.

Regarding the signals received or taken from receiver 102, for example relating to the charges generated by the receiver following exposure to the X-ray beam and collected by the sensors constituting said receiver, these signals are processed by a processing unit 110 that has input ports for the signals generated by receiver 102. The processing unit 110 accesses various processing software contained in corresponding memories or dedicated memory areas. Block 111 indicates a memory for conversion and stitching software, in which software the instructions are encoded to convert the signals received or otherwise taken from receiver 102 into frames or images and the instructions to make the processing unit capable of registering and combining with each other the individual images of said sequence of images relating to different zones of the target and acquired at different time instants. A further memory or memory area indicated with 112 is intended to contain image or frame correction software, in which the instructions are encoded that make the processing unit capable of executing the steps of the method according to the present invention and which provide for executing the correction of a second image of two consecutive images of the sequence of images in such a way that artifacts that may be visible in said second image and that are due to the so-called image delay or also image lag can be eliminated or greatly reduced. Said correction provides, as will be described in detail later, that in the time interval between the exposure of the target for acquiring a first image or a first frame of two images or two frames consecutive to each other and the time instant in which said second image or said second frame is acquired, at least one so-called dark frame or two or more dark frames are acquired at successive time instants and spaced by predetermined time intervals.

Said dark frames are acquired by reading or taking the residual charge in the receiver sensors at the end of the acquisition of the first image or the first frame and in the following time interval until the instant when the X-ray source is reactivated for acquiring the second image or the second frame. Said process is continued for each further image or frame of said sequence of images or frames in a similar manner and for a predetermined number of images or frames of said sequence.

The registration and merging steps are advantageously executed after the correction has been performed, and the merged image, i.e., the image data relating thereto, is transmitted to the control unit and to the display interface 106 or to the memory read/write interface 108, respectively for display, for example on a screen, or for printing the combined image and/or for its storage on a portable support. Furthermore, the control unit 104 can also provide for storing the combined image and/or the sequence of images or the signals from the receiver relating thereto as well as said images after each of the registration and/or correction steps in a memory, such as, for example, in an area of memory 105.

Considering two consecutive frames, i.e., acquired thanks to two exposure steps of the target and the receiver consecutive to each other, generally said exposure steps are executed at time instants separated by a predetermined time interval of the order of magnitude of a few seconds. Therefore, at the instant of acquisition of the exposure signals relating to the second image or the second consecutive frame, the receiver sensors may still contain a residual amount of signal due to the previous exposure for obtaining the first image or the first frame, which may still be present in the receiver sensors when the same is exposed to radiation to acquire the second image or the second frame. Therefore, in said second image or said second frame, at least part of the shape of the object reproduced in the first image or in the first frame may be visible, constituting artifacts that make image analysis difficult.

The residual signal is commonly known as image lag and is mainly due to trapping and release of charge in the sensor elements.

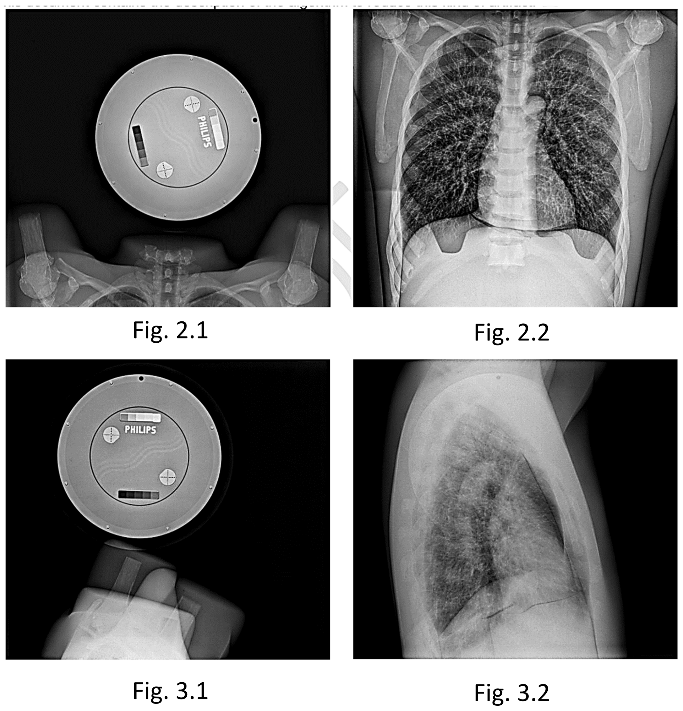

The images of Figures 2.1 and 2.2 and 3.1 and 3.2 show two examples of these effects with reference to two images acquired in succession and not subjected to any correction procedure aimed at eliminating or suppressing the effect, i.e., the artifact.

Figure 2.1 shows a first frame acquired during a first exposure of two consecutive exposures of different areas of a target. The second frame 2.2 was acquired with an exposure subsequent to that of the first frame and relating to a frontal view of the chest. In the lower area of the second image, the shadow of the anatomical structure present in the first frame 2.1 is visible, and also further up the presence of at least part of the circular shape of the disc of Figure 2.1 is evident.

A similar situation is shown in Figures 3.1 and 3.2. In this case, the image relates to a lateral chest radiograph, and similarly to the first case, also for this example, artifacts due to residual image contributions resulting from the acquisition of the first image 3.1 are evident.

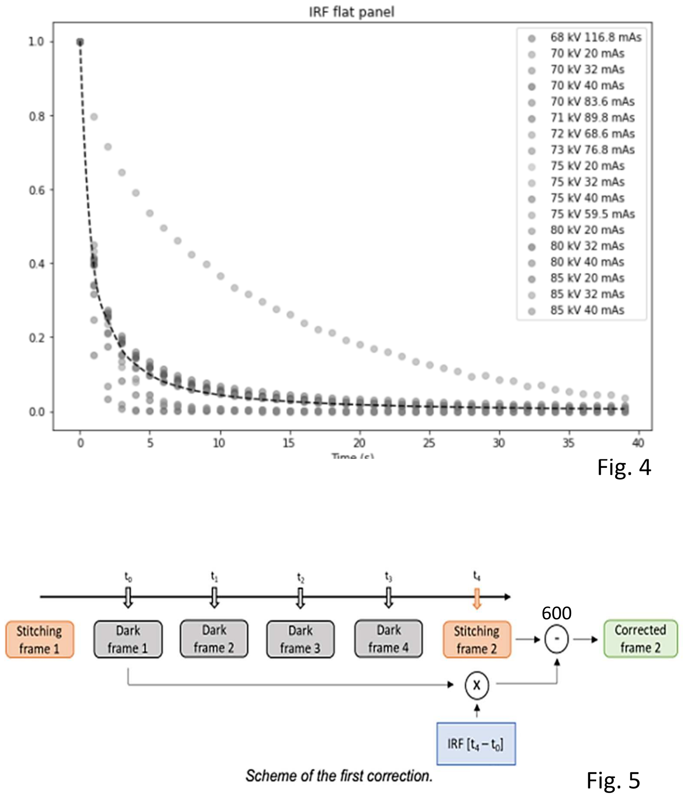

With reference to Figure 5, this shows a first correction step according to one embodiment of the method of the present invention.

In the upper part, a time arrow is shown in which frames 1 and 2 acquired at time instants separated by a predetermined time interval are visible. Furthermore, intermediate time instants provided within said interval and indicated with t0 , t1, t2, t3 are highlighted, while t4 indicates the time instant at which the exposure of the target for acquiring the second frame 2 begins.

As shown in the diagram of Figure 5, a first embodiment of the method according to the present invention provides for executing a correction step of frame or image 2, which is performed as a function of the residual signals present in a so-called dark frame acquired at the initial instant of the time interval between the two exposures for acquiring frame 1 and frame 2, said frame being related to the signals provided by the receiver in the absence of exposure to the X-ray beam, i.e., with the source inactive.

More generally, said signals relating to the residual contributions of the image relating to the first exposure are subtracted from the second frame 2 as shown by the operator (-) indicated with 3, thus obtaining a corrected frame 2.

According to a preferred embodiment, to avoid an error in estimating the image lag due to possible saturation of one or more elements of the detector, the signal contributions of the dark frame are multiplied by a receiver response function called IRF(dt), which is the impulse response function of the detector normalized with respect to the first dark frame, corresponding to the time interval between the first dark frame acquired at instant t0 and the second image or second frame 2 acquired at instant t4. The residual image contributions due to image lag estimated by means of said first dark frame at instant t0 following the exposure of the target for acquiring the first frame 1 and normalized as described above are then subtracted from the second frame 2, obtaining the corrected second frame 2. Using a mathematical formalism, said correction is defined by the following function:

$$Icorr = I - IRF[t4 - t0] * darkFrame(t0) \qquad (1)$$

where:

> $I$ is the second stitching frame 2 acquired;
> $darkFrame(t0)$ is the first dark frame after the first stitching frame 1;
> $IRF[t4 - t0]$ is the receiver response function corresponding to the time interval between the uncorrected second stitching frame 2 and the first dark frame $darkFrame(t0$.

Regarding said impulse response function of the receiver, this is defined empirically and can be estimated, for example, by performing a flood-field exposure and collecting the subsequent signals of the dark frames (frames without exposures) to analyze the changes in pixel value over time.

Figure 4 shows a graph of an example of estimation of the IRF function. In this case, the examined detector had a size of 2840x2874 pixels, and the IRF was evaluated in a central region of size 1235x1500, which was assessed as sufficiently uniform after visual inspection. The region was first filtered with a median kernel to remove spot noise, and the mean pixel value was calculated and normalized with respect to that of the first dark frame (mean[t0]), since the IRF at t0 was equal to 1. This procedure was repeated for different combinations of X-ray source tube voltage and milliampere-seconds, and an average response was extrapolated from the results after excluding outlier values, as shown in Figure 4.

According to an additional characteristic, beyond said first correction step, the method according to the present invention also provides for a further second correction step. In fact, when the artifact is particularly evident, the first correction step may not be sufficient to satisfactorily eliminate the artifacts because pixels with very different values may be subject to different impulse responses, and after the first correction step, a residual artifact may still be visible. The distribution of the residual artifact, i.e., the image contributions constituting said artifact, is defined by the dark frames and is used to obtain the residual artifact itself, which must be subtracted from the image corrected according to the first correction step to further attenuate the image delay, i.e., the contribution to the image of the residual signals present in the receiver at the time of the second exposure for acquiring frame 2. This second correction depends on two parameters, which are the mean and the standard deviation of the residual artifact, and which can be varied to obtain the desired result.

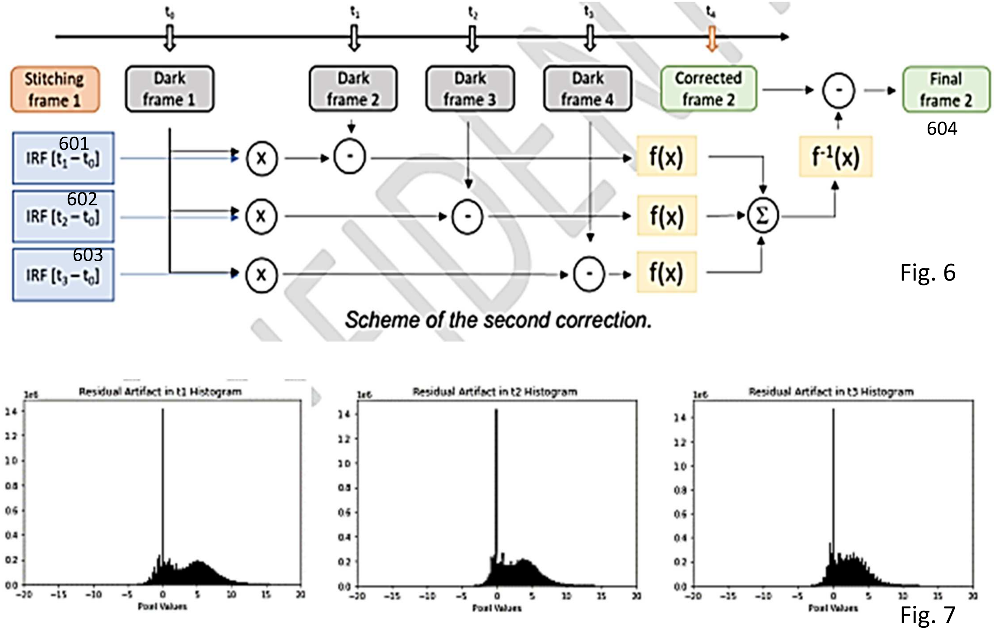

As shown in the diagram of Figure 6, the estimation of the residual artifact, i.e., the image contribution relating to said artifact still present in the image of frame 2 corrected with the first correction step described above, is obtained by subtracting the image lag at time tn from the image data corresponding to the dark frame at time tn.

This is performed for all the dark frames of the sequence of dark frames 2 to 4 as indicated in Figure 6.

The image data acquired with the first dark frame, appropriately multiplied by the IRF function relating to the time difference of the subsequent dark frame at instants t1, t2, and t3 indicated with blocks 600, 601, and 602, are subtracted respectively from dark frame 2, dark frame 3, and dark frame 4.

Furthermore, as can be seen from Figure 7, which shows a histogram of the gray tones of the pixels in the frame relating respectively to dark frame 2, dark frame 3, and dark frame 4, the distribution of the residual artifact has more or less the same shape for each dark frame, but its mean and standard deviation decrease over time since the image delay, i.e., the residual charge relating to the first exposure and still present in the receiver sensors, decreases over time. Therefore, according to a further characteristic, in said second correction step, it is provided to normalize the signals relating to the various residual artifacts by subtracting their mean and dividing them by their standard deviation, thus obtaining a distribution of unit variance and zero mean. The normalization is shown in Figure 6 as f(x).

The corrected signal contributions of the various dark frames 2, 3, and 4 normalized as indicated above are summed, and their mean is calculated to reduce possible noise, obtaining the final residual artifact with zero mean and unit variance, and this is further denormalized as indicated with $f^{-1}(x)$ in Figure 6 and, finally, subtracted from frame 2 subjected to the first correction step by applying said second correction and obtaining said final corrected frame 2 indicated with 604 in Figure 6. Also in Figure 6, the operators identified with the symbol (-) refer to subtraction operations, and those indicated with the symbol (x) refer to multiplication operations.

The "denormalization" of the signals relating to the residual artifact with zero mean and unit variance requires knowledge of the mean ($\mu$) and the standard deviation ($\sigma$) of the signals relating to the residual artifact at time t4. However, these values are not known, so according to a further characteristic of the method according to the present invention, said values are estimated as corresponding to 90% of those relating to the time instant t3.

According to another characteristic, said values may turn out to be far from optimal parameters; therefore, the method provides for leaving said values user-settable via the GUI.

Defining the procedure described above by means of a mathematical formalism, the final frame *Ifinal* is calculated as follows:

$$I_{final} = I_{corr} - \left\{ \left[ \frac{1}{N-1} \sum_{i=2}^{N} f\left( darkframe_{t_{i-1}} - IRF[t_{i-1} - t_0] * darkframe_{t_0} \right) \right] * \sigma + \mu \right\} \quad (2)$$

where N is the number of dark frames collected and the function f(x) is defined as:

$$f(x) = (x - mean)/\texttt{std.}$$

and wherein:

   i is an index ranging from 2 to N;
   *Icorr* is frame 2 after execution of the first correction step;
   *darkFrame*(*ti*) is the contribution of the residual artifact for the dark frame acquired at time instant $t_i$;
   *darkFrame*(*t0*) is the contribution of the residual artifact for the dark frame acquired at time instant $t_0$, i.e., immediately after acquisition of the first frame of two consecutive frames or images.

The method according to the present invention was tested experimentally to verify its effectiveness.

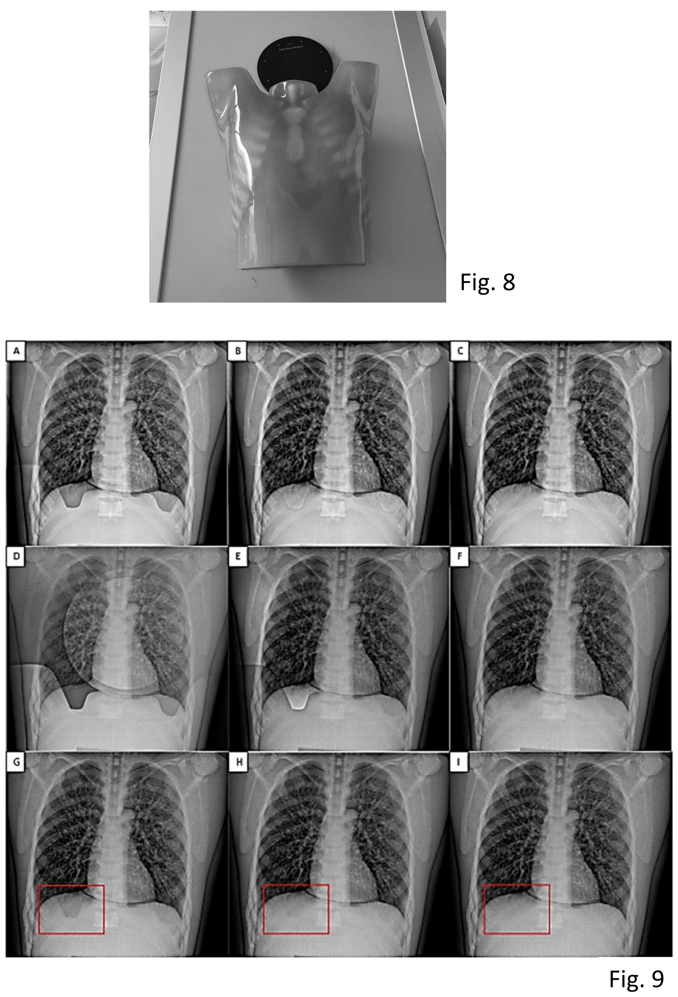

For the execution of the test, the settings of a hospital machine were collected and used to replicate the artifact. Two stitching procedures were evaluated: frontal stitching and lateral stitching of two radiographs referring respectively to the skull and the chest. A circular model and a chest model were used to simulate the patient, as shown in Figure 8.

The procedure parameters, X-ray source tube voltage and milliampere-seconds, were set to further investigate the potential of the algorithm.

The following settings were defined as ordinary: 70-75 kV and 16-20 mA for the skull radiograph, 75-80 kV and 20-25 mA for the chest.

To make a conservative estimate, the tests were also performed by deviating from the ordinary settings to fall into conditions more conducive to artifact formation, thus increasing and reducing the dose respectively for the skull and the chest. In summary, during this second test phase, the various combinations of the following settings were evaluated:

- Skull → voltage: 70, 75, 80, 85 kV
  milliampere-seconds: 20, 30, 40 mAs
- Chest → voltage: 65, 70, 75, 80 kV
  milliampere-seconds: 2, 10, 20 mAs

The first correction and the combination of the two corrections with automatic estimation of $\mu$ and $\sigma$ were compared by qualitative evaluation.

According to qualitative estimates of first approximation, the first correction was sufficient for about 58% of cases where the lag signal was evident, while the combination of the two corrections made the artifact almost imperceptible in over 85% of cases and nevertheless reduced it to an acceptable amount in about 98%. As for the remaining cases, the lag signal could be further mitigated by adjusting the mean and the standard deviation of the residual artifact, although its complete removal was almost impossible.

With reference to Figure 9, this graphically shows the test results. Images A, B, and C refer to the stitching frame before correction, after the first correction, and after both corrections with automatic parameter estimation, respectively, when the lag artifact is evident but contained. Conversely, images D, E, and F refer to a case with a more intrusive artifact. Images G, H, and I show the same frame with the lag artifact corrected with the first correction, both corrections with automatic parameters, and both corrections adjusting respectively the amount of residual signal to subtract. The red box highlights the area where the artifact is most evident: G is an example of inadequate correction, H was considered acceptable, and I was judged as almost imperceptible artifact.

Regarding the algorithm processing time, executing it on an Intel® Xeon® CPU E5-1650 v2 at 3.50 GHz requires about 25 ms to calculate the lag signal, 45 ms for each dark frame except the first (which is not included in the second correction) to calculate the residual artifact and normalize it, less than 5 ms to average the various residues, about 30 ms to perform the correction, and then the frame must be reprocessed before being displayed. Regarding this last step, the processing pipeline could be adapted to skip some processes that are no longer necessary since their outputs are the same as those obtained previously. This would make the procedure faster and more efficient.

The overall increase in stitching procedure time is therefore estimated to be less than 1 second.

Figure 10 shows a flowchart of an execution process of the method according to a non-limiting exemplary embodiment of the present invention.

Step 500 provides for exposing a first target area to X-rays and generating a first radiographic image of said area; at the next step 501, the X-ray source is deactivated, and signals are acquired from the receiver at N consecutive time instants, generating N dark frames.

At the end of a predetermined time interval during which said N dark frames are acquired, step 502 is executed, which provides for varying the relative positions of the X-ray source and/or the receiver and/or the target so as to position in the X-ray beam a second area different from the first and at least partially overlapping said first target area. Subsequently, at step 503, said second or a further target area is exposed to the X-ray beam, and a second radiographic image is generated that reproduces said second target area or a further radiographic image of a sequence of more than two radiographic images that reproduces a further target area of a plurality of target areas.

Step 504 provides for executing the first correction step as defined by the description above and in particular corresponding to correction function (1).

If the correction is considered sufficient, it is evaluated whether, beyond only two consecutive images or frames, said sequence of images comprises more than two consecutive images, and if this is the case, for each of the further consecutive images, steps 501 to 505 are executed.

If there are no further images in said sequence, step 508 of registration and merging is executed. If the correction performed with the first correction step is not sufficient as indicated at step 507, step 506 is executed, which provides for performing also the second correction step. This is executed as described with reference to the embodiments above. Once the correction process for all the images of the sequence of images has been completed, these are registered with each other and combined by merging.

At step 509, the final combined images thus obtained can be displayed and/or printed and/or stored, also optionally together with the individual images of the sequence of images and also with the images obtained after each processing step.

As already previously indicated, the correction process according to one or more of the embodiments described can be provided as activated or activatable automatically, or activation must be specifically set in a system setting program, for example of the system according to Figure 1.

It is also possible to provide different implementations of the correction procedure.

According to one embodiment variant, the correction algorithm and therefore the correction procedure have been conceived as an optional additional function in a radiographic system, said function being settable when the artifact occurs.

One embodiment does not provide for its necessary integration into the ordinary imaging and stitching pipeline since the artifact is evident under particular conditions, namely when a large anatomical region is impressed after an exposure with a large amount of direct radiation and when the first radiograph is overexposed and/or the second is underexposed.

According to a further variant, to favor the usability of the method, it is possible to set an automatic execution of the algorithm, i.e., the execution of the combination of the first and second correction with automatic estimation of the mean and standard deviation of the residual artifact.

According to another implementation characteristic, it is possible to provide that if this correction does not lead to an acceptable image, the user can open an interface tab with a slider that adjusts the standard deviation of the residual artifact, defined as a percentage of that corresponding to the residual artifact of the last dark frame.

One embodiment variant provides for the presence of two sliders to also modify the mean, although it has been noted that most of the effectiveness of the correction was related to the standard deviation. Therefore, said second slider can be omitted to make use simpler.

Also, the choice to express $\sigma$ as a percentage, because it would be more intuitive for non-technical users, is aimed at this purpose.

According to another embodiment variant, if the stitching procedure includes more than two exposures, the correction is executed and managed separately for the various stitching steps; therefore, the user can evaluate the various images one at a time and decide whether to apply the correction and, in that case, whether the automatic algorithm is sufficient or whether manual application with the slider is necessary.

**Claims**

1. A method for reducing lag artifacts in digital radiographs is provided in combination with an X-ray source, an X-ray detector, and a positioning station for a target to be imaged, said station being interposed in the opening cone of the radiation emitted by said source between said source and said detector, and said method comprising the combination of the following steps:

   a) acquiring a sequence of frames of radiographic images of a target, each of said images being acquired by means of imaging exposures of said target performed at different consecutive time instants at a predetermined time interval between said time instants;
   b) said images of said sequence reproducing zones or areas of said target that overlap at least partially in regard to two consecutive images of said sequence of images;
   c) registering the images of said sequence of images on the basis of the image data of said overlapping zones,
   d) combining by merging said registered images to generate a single image comprising the reproduction of the zones of the target acquired from said images of the sequence of images,

   and wherein
   b1) during the acquisition interval of two consecutive images of said sequence of images, the following steps are carried out:

   b2) acquiring one or more so-called dark frames,
   b3) subtracting said one or more dark frames or a combination thereof, optionally also parts thereof, from the subsequent image of said two consecutive images,
   executing the registration step c) and the merging step d) with the images obtained from step b3).

2. A method according to Claim 1, wherein the correction of a second image of two consecutive images is performed using the first dark frame acquired in the time interval between the instant of acquisition of the first image and the instant of acquisition of the second image immediately following said first image according to the following function:

$$Icorr = I - IRF[t4 - t0] * darkFrame(t0)$$

   where:

   $Icorr$ is the corrected frame of the second stitching image,
   $I$ is the frame of the second stitching image as acquired by the detector,
   $darkFrame(t0)$ is the first dark frame acquired at the instant t0 after the first of the two consecutive stitching images has been acquired,
   $IRF[t4 - t0]$ is the receiver response function corresponding to the time interval between the instant of acquisition of the second stitching image of said two consecutive stitching images and the acquisition instant t0 of the first dark frame acquired at the end of the acquisition of the first stitching image.

3. A method according to Claim 2, wherein the detector impulse response function (IRF) is obtained by estimating the same from experimental data and is systematic for the detector, said estimation comprising the steps of:

   performing a flood-field exposure and collecting the signals related to one or more of a predetermined number of subsequent dark frames, i.e., frames acquired in the absence of exposure of the detector to the X-rays from the source;
   analyzing the changes in value over time of the parameters characterizing the appearance of the pixels and which are functions of the signals acquired by the sensors forming the receiver,
   said procedure being repeated for different combinations of the X-ray source power supply voltage and milliampere-seconds.

4. A method according to Claim 3, wherein the analyzed pixels pertain to a subset of pixels in a central region of the image, with the mean value of the pixels being calculated, preferably normalized with respect to the mean value of the pixels of the dark frame first acquired at the instant t0,
while optionally, prior to calculating the mean of the pixels, the pixels of said subset are filtered to remove spot noise, for example, by means of a median kernel.

5. A method according to one or more of the preceding claims, wherein it is provided a second correction step performed in combination with said first correction step wherein said second correction is carried out by calculating the image data related to the artifact caused by charge residues still present in a sequence of dark frames acquired during the time interval between the acquisition of a first image or frame and a second image or frame of two consecutive images or frames, subtracting the data obtained from a previous dark frame of said sequence of two or more dark frames and the data related to the various residual artifacts obtained from the previous step for two consecutive dark frames of a sequence of two or more dark frames are normalized by subtracting their mean and dividing them by their standard deviation, obtaining a unit variance and zero mean distribution, while the data related to said residual artifacts are averaged to reduce possible noise, thereby obtaining image data related to a final residual artifact with zero mean and unit variance.

6. A method according to Claim 5, wherein said final residual artifact with zero mean and unit variance is denormalized and, finally, subtracted from the second image or the second frame of the two consecutive images or frames to which the first correction has been applied, to obtain the final corrected image frame.

7. A method according to Claim 6, wherein said denormalization of the residual artifact with zero mean and unit variance is calculated by defining the mean value ($\mu$) and the standard deviation ($\sigma$) of the residual artifact at the time of acquisition of the second stitching image of at least two consecutive stitching images as equal to 90% of the corresponding values obtained at the instant of the last dark frame in the sequence of two or more dark frames, and optionally such values can also be set by the user.

8. A method according to one or more of the preceding claims, wherein the final corrected frame of the second image, *Ifinal*, is calculated as follows:

$$I_{final} = I_{corr} - \left\{ \left[ \frac{1}{N-1} \sum_{i=2}^{N} f\left(\text{darkframe}_{t_{i-1}} - \text{IRF}[t_{i-1} - t_0] * \text{darkframe}_{t_0}\right) \right] * \sigma + \mu \right\}$$

where *N* is the number of dark frames collected, and the function *f(x)* is defined as:

$$f(x) = (x - mean) / \texttt{std.}$$

9. A radiographic image acquisition system comprising:

at least one X-ray source;
at least one X-ray receiver;
a positioning station for a target, such as a patient or similar or an anatomical area thereof;
the X-ray source being oriented or orientable with its emission output of an X-ray beam directed at the sensitive side of the said X-ray receiver and
said patient positioning station being positioned between said X-ray source and said receiver such that at least a part of the target to be imaged is traversed by said X-ray beam;
said X-ray source and/or said receiver and/or the position of the patient relative to the X-ray source and/or relative to the receiver being movable relative to each other to position in the X-ray beam one or more different areas of the target to be imaged,

a processing unit comprising

at least one memory for a program for converting into images the signals generated by the receiver following its exposure to the X-ray beam transmitted through the target;
at least one memory for a program for controlling the operational steps of the radiographic image acquisition system;

said processing unit comprising communication ports with the outputs of the receiver and communication ports with a radiographic image display and/or printing unit;

at least one memory for a program for correcting the acquired images;

at least one program for registering and merging two or more images of a sequence of images;

in said control program being encoded the instructions executable by the processing unit and which, when executed, enable the processing unit to control the steps of acquiring radiographic images consisting of acquiring a sequence of radiographic images of the target at different times and relating to areas or zones of the target that are different from each other and at least partially overlapping for each pair of consecutive images of said sequence;

in said at least one conversion program being encoded the instructions executable by the processing unit and which, when executed, enable said processing unit to convert the signals output by the receiver into the sequence of images or frames; in said registration and merging program being encoded the instructions enabling the processing unit to register with each other each pair of consecutive images of the sequence of images reproducing different zones of the target, said zones being at least partially overlapping in said two consecutive images;

in said correction program being encoded the instructions enabling the processing unit to perform the correction steps of the subsequent image among said two consecutive images at least partially overlapping according to one or more of the embodiments of the method described above for eliminating or at least partially suppressing residual image contributions from said second image of said two consecutive images, said correction being performed prior to the registration and merging step.

10. A system according to Claim 9, wherein at least the correction program is stored on a storage medium or a removable memory unit from which it can be read and/or downloaded via an interface with a reader for said storage medium or said memory.

Fig. 1

Fig. 2.1

Fig. 2.2

Fig. 3.1

Fig. 3.2

Fig. 4

*Scheme of the first correction.*

Fig. 5

Scheme of the second correction.

Fig. 6

604

Fig. 7

EP 4 765 014 A1

Fig. 8

Fig. 9

Expose a first target area and generate a first radiographic image of said area
**500**

Deactivate X-ray source and acquire signals from the receiver at N consecutive time instants and generate N dark frames
**501**

Vary relative positions of the X-ray source and/or the receiver and/or the **502** target so as to position in the X-ray beam a second area different from the first and at least partially overlapping said first target area

Expose said second or further target area to the X-ray beam and generate a second radiographic image reproducing said second target area
**503**

Execute first correction step of the second image
$$Icorr = I - IRF[t4 - t0] * darkFrame(t0)$$
**504**

Correction sufficient? **505**

YES

NO

Execute second correction step using one or more additional dark frames beyond the first acquired in the time interval between the first and second exposure **506**

YES

Further images of **507** additional target areas?

NO

Execute registration and merging of each pair of consecutive images of a sequence of images relating to as many different target areas into a single image **508**

Store and/or display said merged image and/or the individual images of the sequence **509**

Fig. 10

Europäisches
Patentamt

European
Patent Office

Office européen
des brevets

## EUROPEAN SEARCH REPORT

**Application Number**

**EP 25 22 6095**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/006767 A1 (ENOMOTO JUN [JP]) 14 January 2010 (2010-01-14) | 1,2,9,10 | INV. G06T5/50 |
| A | * abstract; figures 1-5 * * paragraphs [0010], [0014], [0015], [0050], [0069], [0074], [0075], [0096] * | 3-8 | |
| | ----- | | |
| A | US 10 470 735 B2 (KONINKLIJKE PHILIPS NV [NL]) 12 November 2019 (2019-11-12) * abstract * | 1-10 | |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 7 April 2026 | Rimassa, Simone |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 22 6095

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2026

| Patent document cited in search report | | Publication date | Patent family member(s) | | Publication date |
|---|---|---|---|---|---|
| US 2010006767 | A1 | 14-01-2010 | JP | 2010017376 A | 28-01-2010 |
| | | | US | 2010006767 A1 | 14-01-2010 |
| US 10470735 | B2 | 12-11-2019 | CN | 106999132 A | 01-08-2017 |
| | | | EP | 3228074 A1 | 11-10-2017 |
| | | | JP | 6779207 B2 | 04-11-2020 |
| | | | JP | 2018504943 A | 22-02-2018 |
| | | | US | 2017325774 A1 | 16-11-2017 |
| | | | WO | 2016087242 A1 | 09-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5969360 A
- EP 1080443 A
- US 6904126 B2
- US 7496223 B